# EUROPEAN PATENT APPLICATION

(11) **EP 3 800 343 A1**
(43) Date of publication of application: **07.04.2021**
(21) Application number: 20199183.3
(22) Date of filing: 30.09.2020
(51) Int. Cl.: F02D 33/00, H02P 6/15, F02M 37/08

(54) **METHOD OF CONTROLLING A FUEL PUMP**

(30) Priority: 03.10.2019 GB 201914276
(71) Applicant: Delphi Automotive Systems Luxembourg SA, 4940 Bascharage (LU)
(72) Inventor: PERINET, Jean-François, 54260 FRESNOIS-LA-MONTAGNE (FR)
(74) Representative: Delphi France SAS

(57) **Abstract**

A method of controlling an electrically or electronically controlled fuel pump comprising controlling the pump to run at an average speed value in an uneven mode. Said uneven mode or signal may be such as that the speed is made to deliberately fluctuate around an average speed value.

## Description

### TECHNICAL FIELD

This relates to a method of controlling an electronic or electrically controlled fuel pump. It has particular but not exclusive application to rotary pumps.

### BACKGROUND OF THE INVENTION

In recent years, automotive companies have made many improvements to reduce the interior noise levels of their vehicles. This reduction of interior ambient noise has revealed other acoustical problems which were masked and not audible before.

The fuel delivery module is a source of noise that can be audible in many cases, causing passengers to be upset. The root cause of the noise is very often the fuel pump as it is a rotary machine.

It is an object of the invention to overcome this problem.

### SUMMARY OF THE INVENTION

In one aspect is provided a method of controlling an electrically or electronically controlled fuel pump comprising controlling the pump to run at an average speed value in an uneven mode.

The method may including sending a control signal to the pump, said control signal being an uneven signal, regulated to provide a controlled average speed of said pump.

Said uneven mode or signal may be such as that the speed is made to deliberately fluctuate around an average speed value.

Said speed fluctuation may have a random or pseudo random component.

In a second aspect is provided an electrically or electronically controlled fuel pump adapted to be controlled to run at an average speed value in an uneven mode.

The pump may be adapted to receive a control signal to the pump, said control signal being an uneven signal, regulated to provide a controlled average speed of said pump.

Said uneven mode or signal may be such that the speed is made to deliberately fluctuate around an average speed value.

Said speed fluctuation may have a random or pseudo random component.

### BRIEF DESCRIPTION OF THE DRAWINGS

The present invention is now described by way of example with reference to the accompanying drawings in which:
- Figure 1 shows the noise measurement of an electrically/electronically controlled fuel pump;
- Figure 2 shows the prior art case where there is standard fixed regulated speed control;
- Figure 3 shows with an example of the invention where the fuel pump speed is controlled to be deliberately regulated to be uneven;
- Figure 4 shows a figure similar to figure 1 for the results of example of the invention also.

### DESCRIPTION OF THE PREFERRED EMBODIMENTS

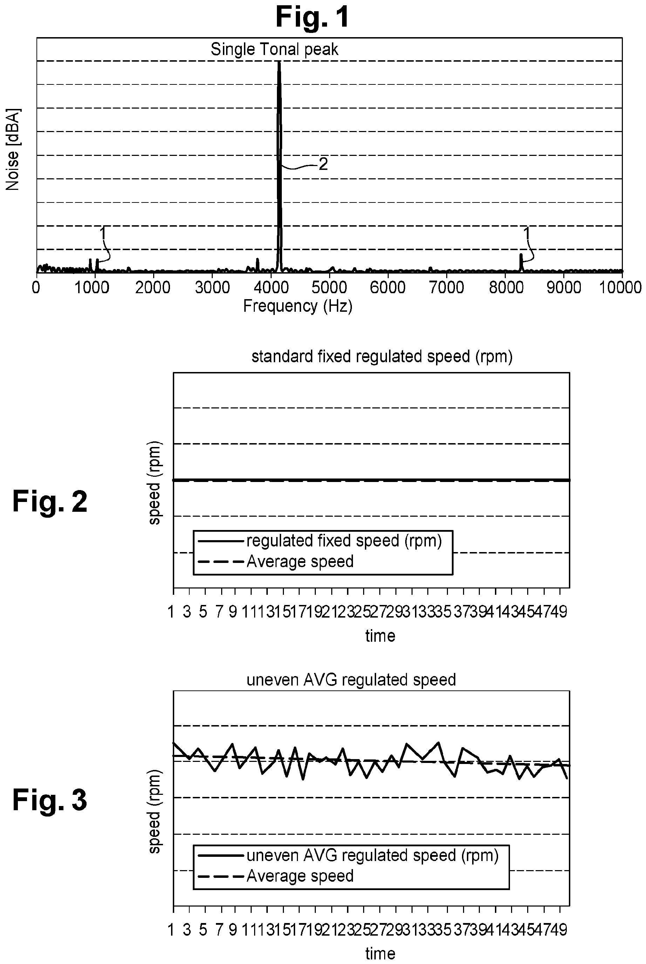

Fig 1 shows the noise measurement of an electrically/electronically controlled fuel pump: i.e. a fuel pump noise spectrum and an example of a sample with a tonal noise 1, that can generate an audible noise in the vehicle. As can be seen there is a large tonal peak 2 of noise at a frequency around 400Hz.

The problem of tonal noise peak is solved by provided an (e.g. specific) uneven average regulated speed control. The speed of the fuel pump is controlled by an electronic controller. The target of the controller is to reach a stable speed of the fuel pump. Rather than in the prior art, the controller controlling the pump to provide a stable signal to achieve the demand or nominal speed, the fuel pump controller sends an uneven signal, e.g. which deliberately oscillates or fluctuates around an average, such that the pump also fluctuates about an average or nominal speed (signal equivalent). The oscillation or fluctuation preferably has a random component or pseudorandom component, but is preferably such that the average value of the signal, the RMS value, the speed or the power to the pump runs or is set at an average particular nominal demand value. The fuel pump electronic controller can integrate the required software to achieve this. The pump is thus run in an uneven mode and the term "uneven mode" should be interpreted as above.

Thus in examples, the invention modifies the instant speed of the fuel pump in a very fast manner, randomly or not, around the average speed target. In this way the hydraulic performance of the pump (flow and pressure) will not be affected because of the inertia of the system. The micro speed variations of the fuel pump will spread and decrease the energy of the tonal peaks, and so reduce the level of audible noise.

Figure 2 shows the prior art case where there is standard fixed regulated speed control and this is contrasted in figure 3 with an example of the invention where the fuel pump speed is controlled to be deliberately regulated to be uneven, to fluctuate about an average (set) value (i.e. in uneven mode) - so to average about the same target speed. Thus these figures show standard speed regulation versus uneven average regulated speed control according to an example. Thus in the uneven mode the signal from a controller sent to the pump is made deliberately uneven, and hence the speed of the motor is deliberately uneven i.e. fluctuates about an average value. Preferably the oscillation of the signal about the average value is within a certain threshold limit which may be an absolute or relative threshold compared to the average value. The frequency spectrum of the fluctuation/uneven spectrum may be selected by the skilled person such that it provides adequate performance of the pump at the nominal speed as well as reduces tonal peaks.

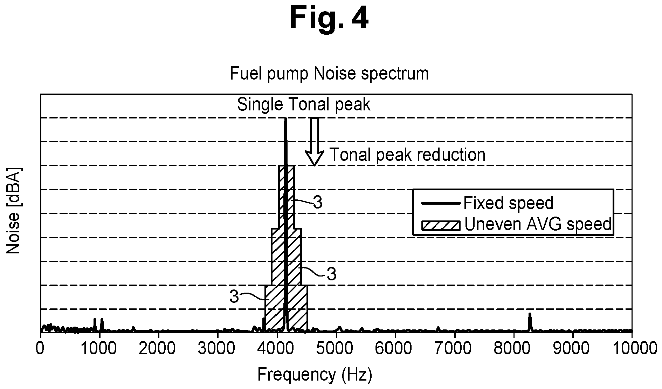

Figure 4 shows a figure similar to figure 1 for the results of example of the invention also and show the tonal peak 2 is e spread into lower side band orders 3 in an example of the invention.

## Claims

1. A method of controlling an electrically or electronically controlled fuel pump comprising controlling the pump to run at an average speed value in an uneven mode.

2. A method as claimed in claim 1 including sending a control signal to the pump, said control signal being an uneven signal, regulated to provide a controlled average speed of said pump.

3. A method as claimed in claim 1 wherein said uneven mode or signal is such as that the speed is made to deliberately fluctuate around an average speed value.

4. A method as claimed in claim 1 wherein said speed fluctuation has a random or pseudo random component.

5. An electrically or electronically controlled fuel pump adapted to be controlled to run at an average speed value in an uneven mode.

6. A pump as claimed in claim 5 adapted to receive a control signal to the pump, said control signal being an uneven signal, regulated to provide a controlled average speed of said pump.

7. A pump as claimed in claim 5 or 6 wherein said uneven mode or signal is such as that the speed is made to deliberately fluctuate around an average speed value.

8. A pump as claimed in claims 5 to 7 wherein said speed fluctuation has a random or pseudo random component.
